# EUROPEAN PATENT APPLICATION

(11) **EP 1 783 409 A1**
(43) Date of publication of application: **09.05.2007**
(21) Application number: 05024282.5
(22) Date of filing: 08.11.2005
(51) Int. Cl.: F16K 13/02, F16K 47/04

(54) **Low noise valve flap and valve comprising a low noise valve flap**

(71) Applicant: Delphi Technologies Inc., Troy, Michigan 48007 (US)
(72) Inventor: Pihet, David, 54560 Beuvillers (FR)
(74) Representative: ten Brink, Carsten

(57) **Abstract**

The invention proposes a low noise valve flap (10) comprising a resilient member (12), wherein the resilient member comprises a toothed edge (14), and/or a low noise control valve including a valve body comprising a valve seat and a valve flap comprising the aforementioned valve flap.

## Description

The present invention relates to a low noise valve flap and a valve comprising such a low noise valve flap, more particularly to a low noise rotary valve flap and a rotary valve comprising such a low noise rotary valve flap and still more particularly to a low noise valve or rotary valve or valve flap for use in a vehicle.

Low noise rotary valves are known in the art, for example from WO 94/07063, where the valve includes a valve body and a rotatable ball, and where diverters in the valve channel are provided for reducing noise and vibration. US 5,465,756 discloses a butterfly valve plate, wherein the valve plate is designed for reduced noise by applying acoustic fences and a noise reduction collar.

One object of the invention is to provide a further embodiment of a low noise valve or valve flap which eases manufacture.

This is achieved by the low noise valve flap defined in claim 1 or the low noise valve defined in claim 2, according to which the low noise valve includes a valve body comprising a valve seat and a valve flap, wherein the valve flap comprises a resilient sealing member, and wherein the sealing member comprises a toothed edge.

The essential advantage of the invention is that the toothed edge inhibits vortex formation and thus results in reduced noise and vibration. Essentially, a vortex which might establish when employing a resilient member without a toothed edge is divided into a number of vortices with associated frequencies different from a frequency, potentially in the audible spectrum, associated to a single vortex when no toothed edge is provided.

Furthermore, due to the toothed edge being formed as part, more particularly as integral part, of the resilient member, manufacture of the low noise valve flap or valve is significantly facilitated when compared with other approaches known in art, where additional noise reduction means require at least one further assembly steps, as well as additional components.

The dependent claims outline advantageous forms of embodiment of the method according to the invention.

If the resilient member comprises at least one ridge facing away from an interior of the hood shaped valve flap and if the toothed edge is provided at the outer circumference of said at least one ridge, the ridge functions as a sealing member while the teeth of the toothed edge disposed at the outer circumference thereof interfere in any position of the flap with the fluid, i.e. gaseous or liquid media passing through the valve, such as air in an HVAC module for use in a vehicle.

According to a preferred embodiment of the invention, the resilient member comprises two ridges, wherein at least one of said two ridges, more particularly both said two ridges, comprise a toothed edge. Further preferably the teeth in both the ridges are positioned in that a tooth in one of the ridges faces a space between adjacent teeth in the counterpart ridge. Thus two ridges with the relevant teeth, more particularly with the teeth in the aforementioned position, provide for an increased production of desired turbulence in the vicinity of the ridges when the valve flap is in an "almost closed" position. The turbulence and the plurality of "small" vortices arising from the perturbation caused by the turbulence accounts for reduced noise.

In further accord with the present invention, the teeth in the or each toothed edge are unevenly spaced providing for different frequencies being associated with the individual vortices resulting from each tooth or the space between two adjacent teeth. The different frequencies might sum up to a mixture of frequencies which is in some extend comparable to so-called white noise which is not audible due to an extinction of numerous frequencies caused by overlay.

In further accord with the present invention, the uneven spacing of the teeth is obtained by varied sizes of the individual teeth and/or by varied widths of the distances between the individual teeth.

Obviously, other connection arrangements can be envisaged.

Other features and advantages of the present invention will appear from the following description of a preferred embodiment of the invention, given as a non-limiting example, illustrated in the drawings. All the elements which are not required for the immediate understanding of the invention are omitted. In the drawings, the same elements are provided with the same reference numerals in the various figures, and in which:
- Fig. 1: is a side view of a hood shaped low noise valve flap according to the invention,

- Fig. 2: is a different perspective side view of a preferred embodiment of the hood shaped low noise valve flap of Fig. 1,
- Fig. 3: is a side view of a detail of the low noise valve flap of Fig. 1 and
- Fig. 4: is a side view of a detail of the low noise valve flap of Fig. 2.

In the following description, for purposes of explanation and not limitation, specific details are set forth, such as particular embodiments, data flows, signalling implementations, interfaces, techniques, etc. in order to provide a thorough understanding of the present invention. However, it will be apparent to one skilled in the art that the present invention may be practiced in other embodiments that depart from these specific details. In other instances, detailed descriptions of well-known techniques, units and devices are omitted so as not to obscure the description of the present invention with unnecessary detail.

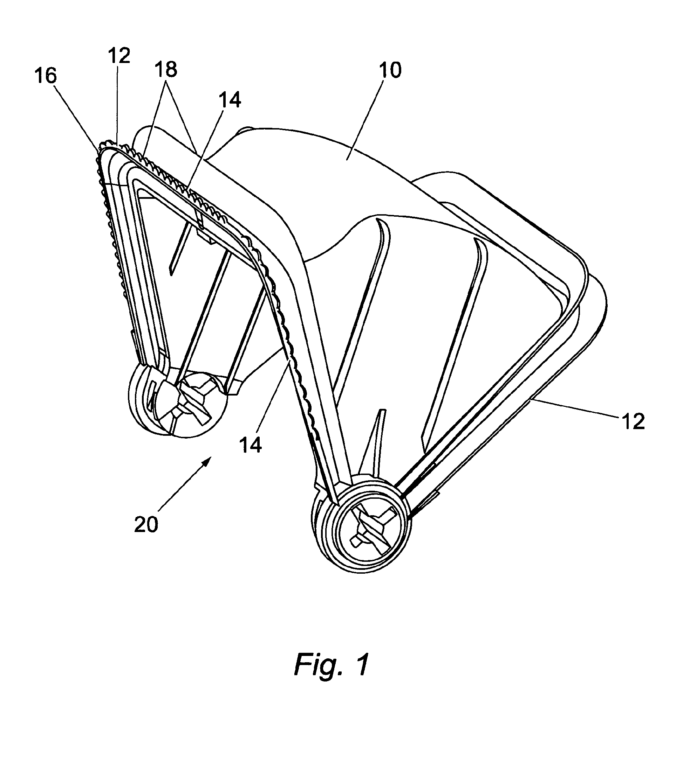

Fig. 1 is a side view of a hood shaped low noise valve flap 10 according to the invention. The low noise valve flap 10 is normally part of a control valve (not shown). Such control valves comprise in a manner as per se known in the art a valve body, a valve seat, wherein the valve seat is provided for engagement with the relevant valve flap 10, and the valve flap 10.

The valve flap 10 portrayed Fig. 1 comprises a resilient member 12, such as a rubber lip. The resilient member 12 comprises a toothed edge 14 with a plurality of teeth 16. In the embodiment portrayed in Fig. 1 the toothed edge 14 is integral with the resilient member 12, more particularly the teeth 16 are in a preferred embodiment formed from rubber also.

Furthermore, in the embodiment of the valve flap according to the invention portrayed in Fig. 1, the resilient member 12 comprises two ridges 18 facing away from an interior 20 of the hood shaped valve flap 10, wherein the toothed edge 14 is provided at the outer circumference of said at least one of said two ridges 18.

The valve flap 10 portrayed Fig. 1 is a rotatable valve flap 10 for use in rotary control valve. However, the valve flap 10 with the toothed edged resilient member 12 and the corresponding control valve comprising the valve flap is not restricted to rotatable movement and as thus the invention might be used for any type of valve.

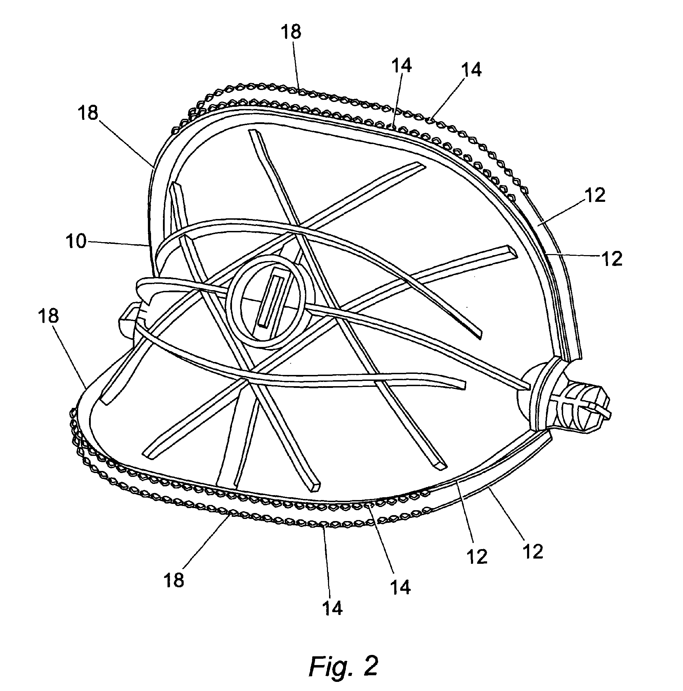

Fig. 2 is a different perspective side view of a preferred embodiment of the hood shaped low noise valve flap of Fig. 1. The valve flap 10 portrayed in Fig. 2 distinguishes over the embodiment in Fig. 1 in that the valve flap 10 in Fig. 2 has a resilient member 12 comprising two ridges 18, wherein both said two ridges 18 comprise a toothed edge 14.

Furthermore the embodiment portrayed in Fig. 2 is different from Fig. 1 in that the valve flap 10 in Fig. 2 comprises a toothed edge 14 on both sides of the flap.

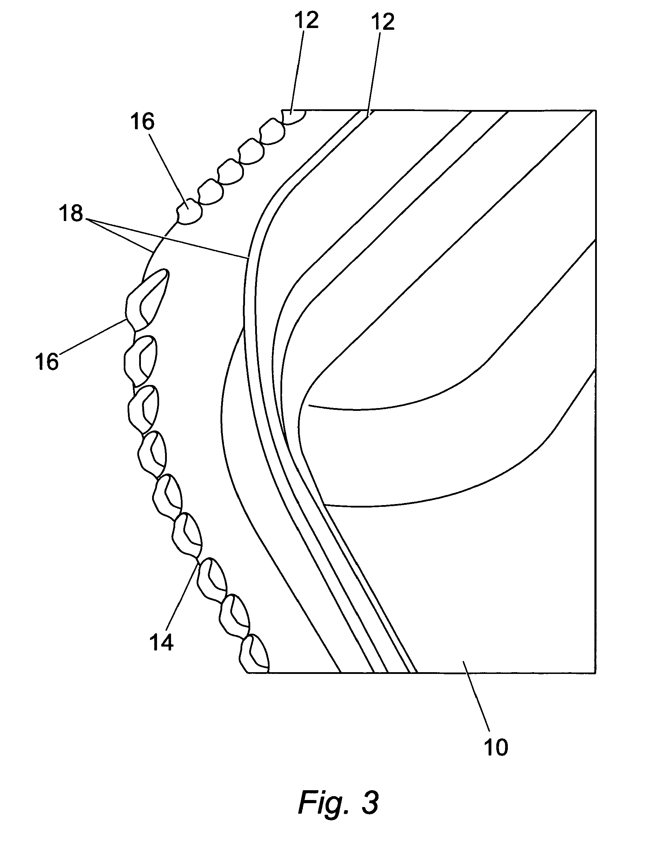

Fig. 3 is a side view of a detail of the low noise valve flap of Fig. 1. Preferably the teeth 16 in the or each toothed edge 14 are positioned at uneven spacing (not specifically shown). Furthermore preferably, the uneven spacing of the teeth 16 is obtained by varied sizes of the individual teeth 16 and/or by varied widths of the distances between the individual teeth 16 (likewise not specifically shown).

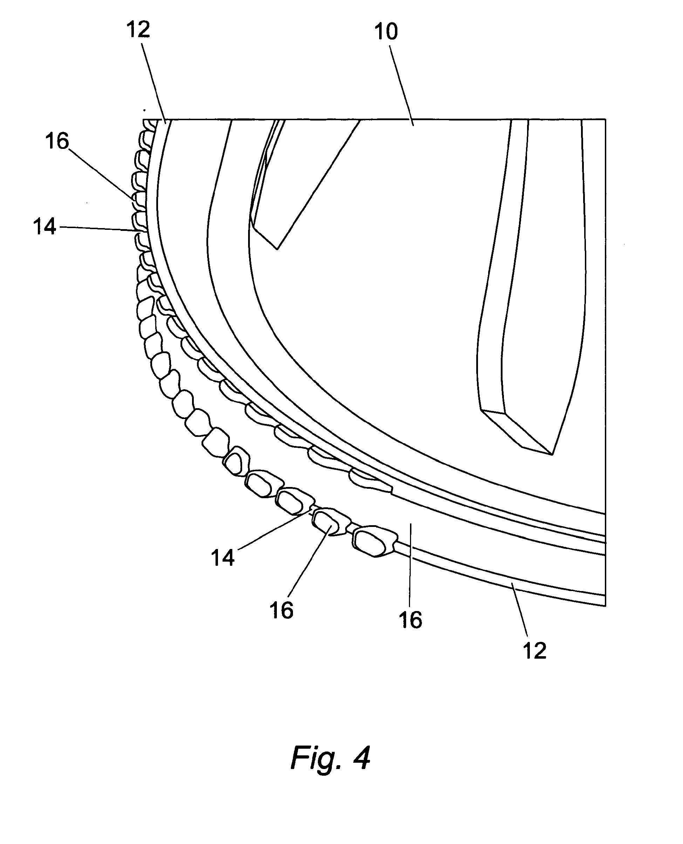

Fig. 4 is a side view of a detail of the low noise valve flap 10 of Fig. 2. What could be recognised from the detail of the valve flap 10 portrayed in Fig. 4 is that the teeth 16 in both the ridges 18 are positioned in that a tooth 16 in one of the ridges 18 faces a space between adjacent teeth 16 in the counterpart ridge 18.

Although a preferred embodiment of the invention has been illustrated and described herein, it is recognized that changes and variations may be made without departing from the invention as set forth in the claims. More specifically, while the particular low noise rotary valve or valve flap as herein shown and described in detail is fully capable of attaining the above-described object of the invention, it is to be understood that it is the presently preferred embodiment of the invention and thus is representative of the subject matter which is broadly contemplated by the present invention.

However, the scope of the present invention fully encompasses other embodiments which may become obvious to those skilled in the art. Accordingly, the scope of the present invention is to be limited by nothing other than the appended claims, in which, for example, reference to an element in the singular is not intended to mean "one and only one" unless explicitly so stated, but rather "one or more".

All structural and functional equivalents to the elements of the above-described preferred embodiment that are known, or later come to be known, to those of ordinary skill in the art are expressly incorporated herein by reference and are intended to be encompassed by the present claims. Moreover, it is not necessary for a device or a specific means to address each and every problem sought to be solved by the present invention, in order to be regarded as being encompassed by the present claims.

Summarising the invention described above it can briefly be described as proposing a low noise valve flap comprising a resilient member 12, wherein the resilient member 12 comprises a toothed edge 14, and/or a low noise rotary control valve including a valve body comprising a valve seat and a rotatable valve flap comprising the aforementioned valve flap.

### Reference Numerals

- 10: valve flap
- 12: resilient member
- 14: toothed edge
- 16: tooth / teeth
- 18: ridge
- 20: interior (of the hood shaped valve flap)

## Claims

1. A low noise valve flap (10)
**characterised in**
comprising a resilient member (12), wherein the resilient member (12) comprises a toothed edge (14).

2. A low noise valve including a valve body comprising a valve seat and a valve flap (10),
**characterised in**
comprising a valve flap (10) according to claim 1.

3. The valve flap of claim 1
or the valve of claim 2,
wherein the toothed edge (14) is integral with the resilient member (12).

4. The valve flap of claims 1 or 3
or the valve of claims 2 or 3,
wherein the resilient member (12) comprises at least one ridge (18) facing away from an interior of the hood shaped valve flap (10) and
wherein the toothed edge (14) is provided at the outer circumference of said at least one ridge (18).

5. The valve flap of claim 4
or the valve of claim 4,
wherein the resilient member (12) comprises two ridges (18) and wherein both said two ridges (18) comprise a toothed edge (14).

6. The valve flap or the valve of any one of the preceding claims,
wherein the teeth in the or each toothed edge (14) are unevenly spaced.

7. The valve or the valve flap of claim 6,
wherein the uneven spacing of the teeth is obtained by varied sizes of the individual teeth (16) and/or by varied widths of the distances between the individual teeth (16).

8. The valve flap or the valve of any one of the preceding claims,
wherein the resilient member (12) is a rubber lip.

9. The valve flap or the valve of any one of the preceding claims, wherein the valve is a rotary control valve and/or wherein the valve flap (10) is a rotatable valve flap (10).
